# DEMANDE DE BREVET EUROPEEN

(11) **EP 4 446 085 A1**
(43) Date de publication de la demande: **16.10.2024**
(21) Numéro de dépôt: 23167607.3
(22) Date de dépôt: 12.04.2023
(51) Int. Cl.: B29C 43/36, B29C 43/42, B29C 33/30, B29C 33/48, B29C 70/46, B29K 79/00, B29K 81/00, B29K 101/12, B29K 105/08, B29K 271/00, B29L 31/30

(54) **OUTILLAGE D'ESTAMPAGE À MOBILITÉS MULTIPLES**

(71) Demandeur: Daher Aerospace, 94390 Orly Aérogare CEDEX (FR)
(72) Inventeur: GUERNIC, Antoine, 85660 Saint Philbert de Bouaine (FR); JOUTEUX, Rémi, 44200 Coueron (FR)
(74) Mandataire: Ipside

(57) **Abrégé**

L'invention concerne un outillage d'estampage d'un flan composite à matrice thermoplastique et renfort fibreux continu, ainsi qu'un procédé d'estampage mettant en oeuvre un tel outillage, l'outillage comprenant :
- une matrice comprenant une empreinte (110) comportant un fond (111) et des parois latérales (112) ;
- un poinçon (120) dont la forme externe est appairée avec l'empreinte de la matrice et comprenant une partie centrale (123) et au moins deux parties mobiles latérales (121, 122) en liaison glissière avec la partie centrale (123), de sorte que les parties latérales étant arrêtées en translation selon la direction de frappe (190) contre le fond de la matrice, le déplacement de la partie centrale (123) dans cette même direction provoque le déplacement des parties latérales selon des translations perpendiculaires à la direction de frappe (190).

## Description

### Domaine technique

L'invention appartient au domaine des outillages, plus particulièrement au domaine des outillages d'estampage utilisés pour la mise en forme de matériaux composite à matrice thermoplastique.

Plus précisément, l'invention concerne un outillage d'estampage comprenant des mobilités et spécifiquement des mobilités multiples.

### Technique antérieure

L'estampage est une technique de mise en forme consistant à déformer un flan entre un poinçon et une matrice de formes complémentaires séparées par un entrefer correspondant à l'épaisseur de la pièce réalisée.

Cette mise en forme s'effectue par un mouvement de translation relatif du poinçon tendant à le rapprocher de la matrice puis à pénétrer dans celle-ci obligeant le flan, couvrant initialement l'entrée de l'empreinte de la matrice, et pris dans l'entrefer entre la matrice et le poinçon, à se déformer de sorte à reproduire les formes du poinçon et de la matrice lors de la pénétration dudit poinçon dans ladite matrice.

Généralement, l'ensemble est installé sur une presse, la matrice étant fixe et le poinçon étant fixé au piston ou vérin de la presse et le mouvement de formage est une translation verticale.

Un outillage est dit « à mobilités » lorsque celui-ci comprend des éléments qui se déplacent de manière différente du mouvement de formage aussi appelé mouvement de frappe. Ces éléments sont situés sur le poinçon ou la matrice, mais de manière générale sont plutôt situés sur le poinçon.

Selon des exemples de mobilité non limitatifs, ces éléments se déplacent au cours de la frappe dans une direction comprenant une composante perpendiculaire à la direction du formage, ou dans la direction de formage mais à une vitesse différente de la vitesse de frappe, voire en sens inverse du sens de la frappe.

Ces mobilités peuvent être pilotées par des effecteurs électriques, pneumatiques ou hydrauliques ou être générées par des liaisons mécaniques appropriées entraînées par le mouvement de formage lui-même.

Le document EP 2 243 617 décrit un exemple d'un tel outillage à mobilité pour l'estampage d'un flan constitué d'un composite à matrice thermoplastique, est comprenant un élément mobile selon une direction perpendiculaire à la direction de formage de sorte à réaliser un pliage.

Un outillage à mobilités est particulièrement utile pour la réalisation par estampage de pièces à bords tombés lorsque le flan composite comporte un renfort fibreux continu avec des fibres ne présentant pas ou très peu de plasticité tels que des fibres de verre ou de carbone.

En effet, la déformation d'un tel flan se produit par des glissements interlaminaires et interfibres c'est-à-dire par des modifications locales de la distance entre les fibres dans des limites acceptables.

Ainsi, pour déformer un tel flan celui-ci doit être porté à une température suffisante, généralement égale ou supérieure à la température de fusion du polymère constituant la matrice du composite, de sorte que ce polymère n'oppose plus, ou très peu, de résistance aux mouvements interlaminaires des renforts et autorise leur glissement relatif.

En termes simplifiés, l'estampage d'un flan composite à matrice thermoplastique, renforcé par des fibres continues ne présentant pas ou très peu de plasticité, implique de placer ce flan, par chauffage, dans un état ou celui-ci perd une bonne part de sa cohésion. Cette cohésion est restaurée en fin d'estampage par le compactage du flan entre les parois du poinçon et de la matrice, de sorte que lorsque la pièce finale comprend au moins deux bords tombés, une mobilité est nécessaire pour obtenir à la fois le formage du flan puis le compactage desdits bords tombés.

La phase de re-compactage en fin d'estampage est essentielle car elle doit à la fois supprimer les vides dans la stratification et éviter les essorages, où un compactage trop important éjecte la résine entre les fibres. La capacité de contrôler des épaisseurs dans un outillage à mobilités est par suite essentielle.

Le document EP 1 543 942 décrit un autre exemple d'outillage à mobilités pour l'estampage d'un flan composite à matrice thermoplastique et renfort fibreux continu, notamment pour la réalisation d'une pièce à bords tombés en forme de demi-boîte.

Ce dispositif de l'art antérieur comprend un poinçon, pourvu de pièces latérales mobiles liées au poinçon par des liaisons élastiques, lesdites pièces latérales sont aptes à s'écarter d'une partie centrale dudit poinçon, ladite partie centrale comprenant une partie en forme de coin liée au poinçon et apte à se déplacer verticalement relativement aux pièces latérales lorsque, au cours de l'estampage le poinçon atteint le fond de la matrice, ce déplacement relatif de la partie en forme de coin provoquant l'écartement des pièces latérales, rendant ainsi possible le compactage des bords tombés de la pièce en forme de demi-boîte.

La cinématique de ce dispositif de l'art antérieur fait que les parties latérales se déplacent selon un mouvement de pivotement sous l'effet de l'enfoncement de la pièce en forme de coin. Le point de pivotement étant proche du fond de la matrice, d'une part la pression de compactage sur les bords n'est pas uniforme, de plus, la cinématique de ce dispositif ne permet pas la réalisation de pièce à bords tombés présentant un pincement, c'est-à-dire pour lesquelles la distance entre deux bords tombés, mesurée parallèlement au fond diminue lorsque l'on s'éloigne dudit fond.

Or de telles pièces, en forme de boîte avec des bords tombés en pincement, sont notamment rencontrées en aéronautique, par exemple pour les nervures de voilure.

De plus le mécanisme de mobilité ne permet pas un réglage précis du compactage de la pièce obtenu par ces mobilités et son appairage avec la matrice.

Le document FR2717735 décrit un outillage comprenant des moyens de pressage latéraux pour consolider en forme une pièce en forme de boîte. Cet outillage n'est pas adapté à l'estampage d'un flan thermoplastique composite consolidé.

De la même manière le document DRE741682 décrit un outillage pour la consolidation en forme dont les solutions techniques ne sont pas applicables à l'estampage d'un flan composite consolidé.

### Résumé de l'invention

L'invention vise à résoudre les insuffisances exposées ci-avant et concerne à cette fin, un outillage pour l'estampage d'un flan composite à matrice thermoplastique comprenant :
- une presse comportant un plateau fixe, un plateau mobile et des moyens pour déplacer le plateau mobile vers le plateau fixe selon une direction de frappe ;
- une matrice comprenant une empreinte apte à être fixée sur le plateau fixe de la presse, comprenant une ouverture avec une largeur d'entée et comportant un fond et des parois latérales ;
- un poinçon apte à être monté sur le plateau mobile de la presse, dont la forme externe est appairée avec l'empreinte de la matrice et comprenant une partie centrale et au moins deux parties mobiles latérales en liaison glissière avec la partie centrale comprenant une extrémité entre les parties latérales et formant un coin entre lesdites parties latérales, des moyens de pression entre les parties latérales et le poinçon dans la direction de frappe, de sorte qu'une largeur du poinçon soit inférieure à la larguer d'entrée de l'ouverture de la matrice et que les parties latérales étant arrêtées en translation selon la direction de frappe contre le fond de la matrice, le déplacement de la partie centrale dans cette même direction relativement aux parties latérales, provoque le déplacement des parties latérales l'une par rapport à l'autre selon des translations perpendiculaires à la direction de frappe réalisant une première expansion latérale du piston dans la direction de cette translation vers les parois latérales de la matrice, de sorte qu'une largeur d'expansion du poinçon est alors égale ou supérieure à la larguer d'entrée de l'ouverture de la matrice.

Ainsi l'expansion latérale du poinçon est réalisée par une cinématique de translation des parties latérales ce qui permet d'une part un compactage uniforme des bords tombés de la pièce compris entre ces parties latérales et les parois latérales de la matrice et d'autre part permet audit poinçon de réaliser l'estampage d'une pièce à bords tombés avec un fort pincement de ceux-ci.

L'invention est avantageusement mise en oeuvre selon les modes de réalisation et variantes exposés ci-après, lesquels sont à considérer individuellement ou selon toute combinaison techniquement opérante.

Avantageusement, la partie centrale du poinçon comprend un épaulement formant butée à son extrémité entre les parties mobiles latérales, lesdites parties mobiles étant arrêtées en translation dans la direction de la frappe relativement à la partie centrale, pressées contre cette butée par au moins un ressort agissant sur les parties mobiles latérales dans la direction de la frappe entre lesdites parties latérales et le plateau mobile de la presse. Cet aménagement permet de rétracter l'expansion du poinçon et de remonter celui-ci après la frappe lors du simple mouvement du retrait du poinçon même si la pièce présente des bords tombés à fort pincement.

Selon un mode de réalisation, le poinçon de l'outillage comprend 2 autres parties latérales en liaison glissière avec une partie centrale formant un coin entre lesdites deux autres parties mobiles latérales, de sorte à réaliser une deuxième expansion latérale du piston selon une direction perpendiculaire à la direction d'expansion de la première expansion latérale. Ce mode de réalisation est adapté à la fabrication de pièce en forme de demi-boîte comprenant 4 bords tombés.

Avantageusement, la partie centrale en forme de coin du poinçon de l'outillage comprend deux parties et entre ces deux parties des moyens pour régler une largeur de la partie centrale selon la direction de l'expansion latérale. Ce mode de réalisation permet un appairage précis du poinçon à mobilités avec la matrice et un réglage précis des épaisseurs des pièces obtenues par estampage au moyen de cet outillage.

L'invention concerne également un procédé pour la réalisation d'une pièce comprenant une âme avec une épaisseur d'âme et au moins deux bords tombés au moins l'un desdits bords tombés ayant chacun une épaisseur de bord tombé, lesdits bords tombés étant orientés par rapport à l'âme d'un angle inférieur à 90°, ledit procédé mettant en oeuvre un outillage selon l'invention et comprenant des étapes consistant à :
- appairer le poinçon et la matrice de l'outillage en réglant les moyens pour régler la largeur de la partie centrale du poinçon en fonction des épaisseurs de l'âme et des bords tombés ;
- obtenir un flan composite ;
- chauffer le flan composite à une température égale ou supérieure à une température de fusion de la matrice polymère ;
- positionner le flan composite au-dessus de la matrice de l'outillage et estamper le flan composite entre le poinçon et l'empreinte de la matrice selon une course de frappe du plateau mobile jusqu'à ce que l'extrémité du poinçon atteigne une distance du fond de l'empreinte égale à l'épaisseur de l'âme ;
- poursuivre la course du plateau mobile pour déplacer les parties latérales mobiles du poinçon jusqu'à des distances des parois latérales de l'empreinte égales aux épaisseurs des bords tombés et compacter la pièce ;
- refroidir la pièce sous pression entre le poinçon et l'empreinte jusqu'à une température inférieure à la température de fusion de la matrice polymère pour consolider la pièce ;
- déplacer le plateau mobile en sens inverse et démouler la pièce.

Ce procédé permet de fabriquer en série et de manière économique des pièces structurelles composites de haute qualité et de haute performance structurelle vis-à-vis de leur masse, notamment des nervures de voilures d'aéronef présentant des bords tombés en pincement.

### Brève description des dessins

L'invention est mise en oeuvre selon les modes de réalisations préférés exposés ci-après, nullement limitatifs, et en référence aux figures 1 à 6 dans lesquelles :
[Fig.1] représente, selon une vue en coupe simplifiée, un exemple de réalisation de l'outillage objet de l'invention en début de course d'estampage ;
[Fig.2] montre selon la même coupe que la figure 1, l'outillage objet de l'invention en fin de course d'estampage ;
[Fig.3] est une vue en perspective d'un exemple de réalisation d'un poinçon comprenant des parties latérales mobiles selon deux directions sécantes ;
[Fig.4] montre le poinçon de la figure 3 selon une vue en perspective partielle et en éclaté ;
[Fig.5] représente schématiquement la section d'une voilure d'un aéronef selon une coupe définie sur cette même figure ;
[Fig.6] montre l'organigramme d'un procédé mettant en oeuvre un outillage selon l'invention.

### Description des modes de réalisation

Dans tout le texte, le terme « flan » désigne une ébauche plane rigide, détourée selon un contour approprié et destinée à être déformée pour obtenir une pièce tridimensionnelle.

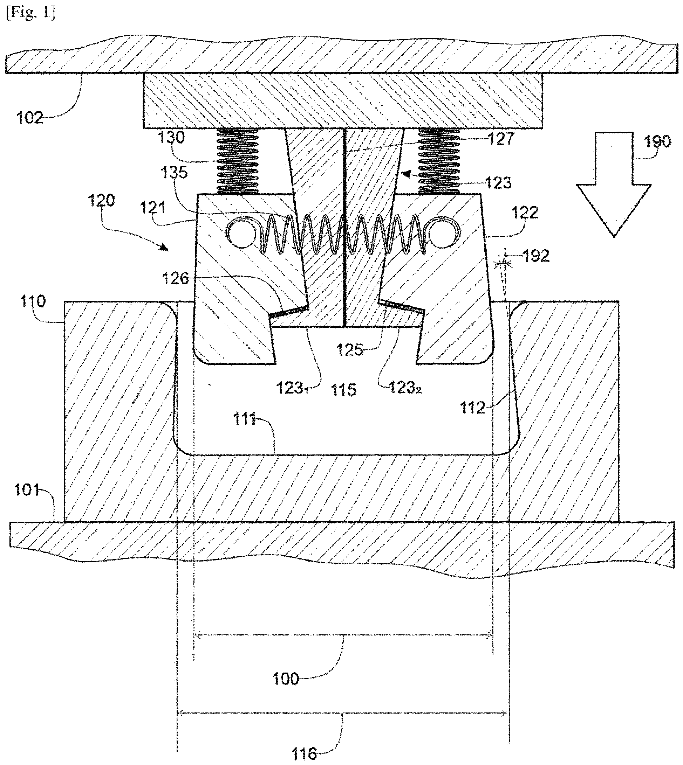

Dans les figures 1 à 4, l'outillage est représenté sans la pièce réalisée.

Figure 1, selon un exemple de réalisation, l'outillage objet de l'invention comprend une presse (non représentée) comprenant un plateau fixe (101) et un plateau mobile (102). Le plateau mobile est susceptible d'être déplacé vers le plateau fixe, par exemple au moyen d'un vérin hydraulique, selon une direction, dite direction de frappe (190), de sorte à réaliser, par exemple, une opération d'estampage.

Selon cet exemple de réalisation, une matrice (110) comprenant une empreinte (115) de formage, est fixée au plateau fixe (101) par des moyens appropriés. L'empreinte est délimitée par un fond (111) et des parois latérales (112). Selon cet exemple de réalisation les parois (112) de l'empreinte présentent un pincement, selon un angle (192) mesuré par rapport à la direction de frappe (190), de sorte que la largeur de l'empreinte est plus importante au fond (111) qu'à l'entrée de l'empreinte sur la face opposée de la matrice.

Un poinçon (120) est fixé au plateau mobile (102) et se déplace par conséquent avec celui-ci. Le poinçon comprend une partie centrale (123) en forme de coin insérée entre des parties latérales (121, 122) mobiles.

Selon cet exemple de réalisation, la partie centrale comprend à son extrémité, entre les parties latérales mobiles (121, 122), une partie en épaulement (125) formant butée.

Les deux parties latérales mobiles (121, 122) sont en liaison glissière sur la partie en coin de la partie centrale (123), et sont poussées contre l'épaulement (125) formant butée par des ressorts de compression (130) agissant entre le lesdites parties latérales mobiles (121, 122) et le plateau fixe (102) de la presse.

La position de la butée réalisée par l'épaulement est avantageusement réglable par des moyens appropriés tels que des cales pelables (126).

Selon cet exemple de réalisation, un ressort de traction (135) tend à plaquer les parties latérales mobiles (121, 122) au contact de la partie centrale (133).

La forme du poinçon (120) et de l'empreinte (115) de la matrice sont appairées, de sorte que le poinçon est apte à être insérée dans ladite empreinte en laissant entre le poinçon et l'empreinte un entrefer correspondant à l'épaisseur de la pièce à réaliser (non représentée).

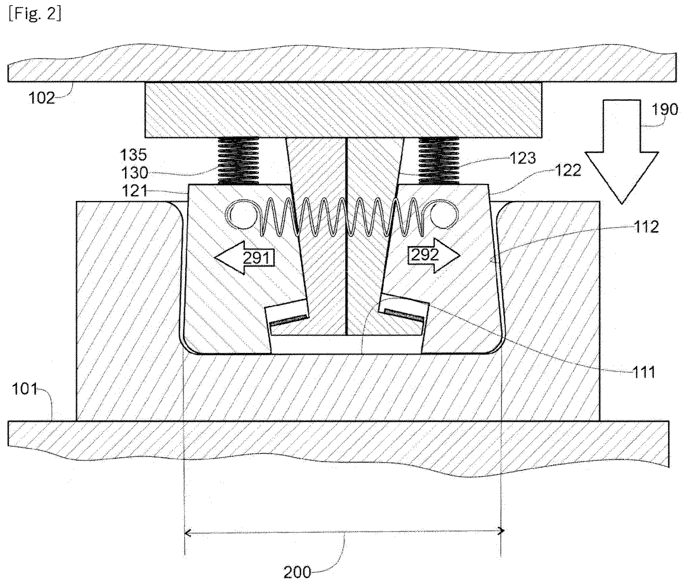

Figure 2, le poinçon (120) descendant dans l'empreinte (115), lorsque les extrémités des pièces latérales mobiles (121, 122) entrent en contact avec le fond (111) de l'empreinte (115), directement sur cette figure mais en pratique avec le fond de la pièce à réaliser compris entre le fond de matrice et l'extrémité du poinçon, si le mouvement de frappe (190) est poursuivi alors la partie centrale (123) du poinçon se déplace dans la direction de frappe (190) entre les pièces latérales mobiles (121, 122) et relativement à celles-ci. Compte tenu de la forme en coin de la liaison glissière entre les pièces latérales mobiles (121, 122) et la pièce centrale (123) du poinçon, ce déplacement relatif produit une expansion du poinçon, les pièces latérales mobiles se déplaçant dans des directions (291, 292) perpendiculaires à la direction de frappe (190) et se rapprochant des parois latérales (112) de l'empreinte de la matrice, alors que les ressorts (130) se compriment.

Ainsi, l'utilisation de cet outillage permet de comprimer une épaisseur de matière se trouvant entre les pièces latérales mobiles du poinçon et les parois latérales de l'empreinte y compris dans les zones de raccordement entre lesdites parois latérales (112) et le fond (111). Cette aptitude de l'outillage à réaliser cette compression latérale permet l'estampage puis la consolidation d'un flan composite à matrice thermoplastique et renfort fibreux continu, préalablement porté à une température proche de la température de fusion du polymère constituant sa matrice.

En revenant à la figure 1, sur cette figure les parties latérales mobiles (121, 122) du poinçon sont rapprochées l'une de l'autre de sorte que la largeur (100) du poinçon est inférieure à une largeur d'entrée (116) de l'ouverture de la matrice et que celui-ci peut pénétrer dans ladite matrice bien que les parois latérales de la matrice soient en pincement.

Figure 2, la pénétration de la partie centrale (123) du poinçon entre ses parties latérales (121, 122) entraîne une expansion de la largeur du poinçon de sorte que qu'une largeur d'expansion (200) du poinçon, sous l'effet de cette expansion peut devenir supérieure à la largeur d'entrée de l'empreinte de la matrice.

Ainsi, l'outillage objet de l'invention est adapté pour estamper des pièces comprenant des bords tombés présentant un angle pincement (192) élevé, jusqu'à 30°.

À la fin d'une opération d'estampage, le plateau mobile (102) de la pièce est remonté de sorte à s'éloigner du plateau fixe (101). Les ressorts de compression (130) continuent de presser les parties latérales mobiles (121, 122) du poinçon vers la matrice, alors que le ressort de traction (135) plaque les parties latérales mobiles contre la partie centrale (123) du poinçon, de sorte que le déplacement relatif de la partie centrale (123) en forme de coin provoque le resserrement des parties latérales mobiles et le rétreint du poinçon qui peut être sorti de l'empreinte.

Figure 2, la partie centrale est représentée avec des pentes symétriques de sorte que pour un déplacement relatif donné selon la direction de frappe (190) de la partie centrale (123), les parties latérales mobiles (121, 122) se déplacent latéralement d'une même course (291, 292). L'homme du métier comprend que la partie centrale (123) peut comporter des pentes dissymétriques de sorte qu'un déplacement relatif donné de la partie centrale (123) selon la direction de frappe (190) conduise à des courses (291, 292) différentes de la partie mobile à droite (122) et de la partie mobile à gauche (121) sur la figure, afin de s'adapter à une géométrie de pièce spécifique, notamment des pincements des bords tombés différents de chaque côté.

En revenant à la figure 1, la pièce centrale (123) est avantageusement constituée de deux parties (123₁, 123₂) et comprend des moyens (127), par exemple des cales pelables, entre lesdites deux parties de sorte à régler la largeur de la partie centrale (123) et ainsi définir de manière précise l'entrefer entre les parties latérales mobiles et les parois latérales de l'empreinte en fin de course du poinçon ainsi que l'appairage précis du poinçon avec la matrice.

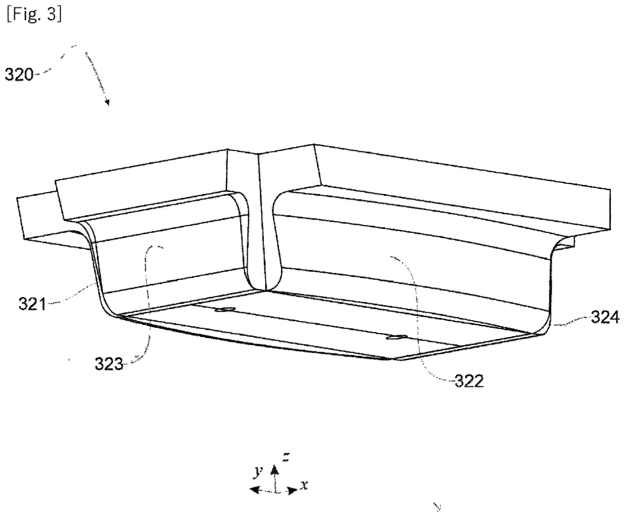

Figure 3, selon un exemple de réalisation le poinçon (320) de l'outillage objet de l'invention comprend des parties latérales mobiles (321, 322, 323, 324) aptes à réaliser une expansion selon des plans sécants. Ainsi, en référence au repère figure 3, lors de la descente du poinçon, 2 des parties latérales mobiles (321, 322) réalisent une expansion du poinçon selon la direction y dans le plan zy et les deux autres parties latérales mobiles (323, 324) réalisent une expansion du poinçon selon la direction *x* dans le plan *xz.*

Les caractéristiques développées ci-avant s'appliquent aux parties latérales mobiles (321, 322) et aux parties latérales mobiles (323, 324) dans l'autre plan.

L'homme du métier comprend que les plans sécants dans lesquels les différentes expansions sont réalisées ne sont pas nécessairement perpendiculaires d'une part et d'autre part que ce mode de réalisation n'est pas limité à une combinaison d'expansions selon deux plans sécants uniquement et que les mobilités peuvent agir dans une pluralité de plans sécants.

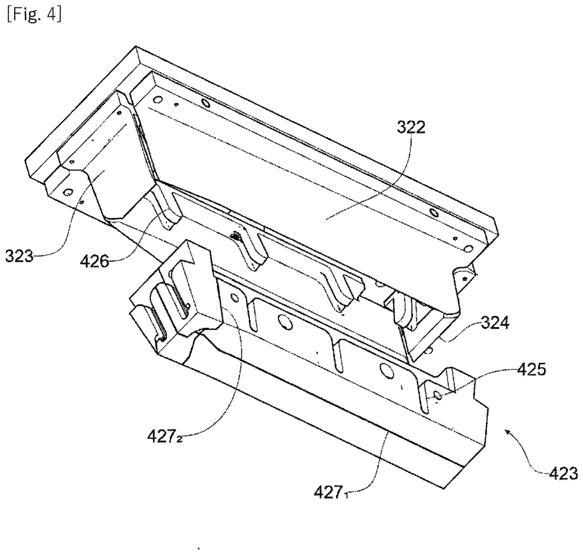

Figure 4, la partie centrale (423) de cet outillage comprend un assemblage de plusieurs parties, et des moyens (427₁, 427₂) entre ces parties pour un réglage précis des entrefers entre le poinçon et les parois latérales de l'empreinte de la matrice.

Selon cet exemple de réalisation, la partie centrale (423) et les parties latérales mobiles (321, 322, 323, 324) sont liées par des rainures (425) pratiquées dans la partie centrale (423) qui coopèrent avec des tenons (426) sur les faces internes des parties latérales mobiles. Ces assemblages assurent l'arrêt en translation des parties latérales mobiles perpendiculairement à leur direction d'expansion respectives mais aussi les fonctions techniques de l'épaulement (125) visible sur la figure 1.

La sélection des matériaux constituant les diverses parties de l'outillage est fonction de la nature des matériaux constituant le flan mis en forme et notamment de la température d'estampage et des caractéristiques de dilatation thermique du matériau constituant le flan.

À titre d'exemples non limitatifs, les diverses parties sont réalisées dans un acier à outillage au carbone comprenant du chrome du magnésium et du molybdène, ou encore dans un acier de type INVAR^{®} comprenant du fer et du nickel.

La capacité de l'outillage de l'invention à réaliser par estampage des pièces composites à matrice thermoplastique comprenant des bords tombés en pincement, est avantageusement utilisée pour intégrer des fonctions sur certaines pièces qui peuvent ainsi être réalisées d'un seul tenant alors que, selon les techniques de l'art antérieur, celles-ci nécessitaient l'assemblage de plusieurs pièces. Réduire le nombre de pièces et le nombre d'assemblages permet ainsi de réduire les coûts de fabrication et d'alléger les éléments structuraux.

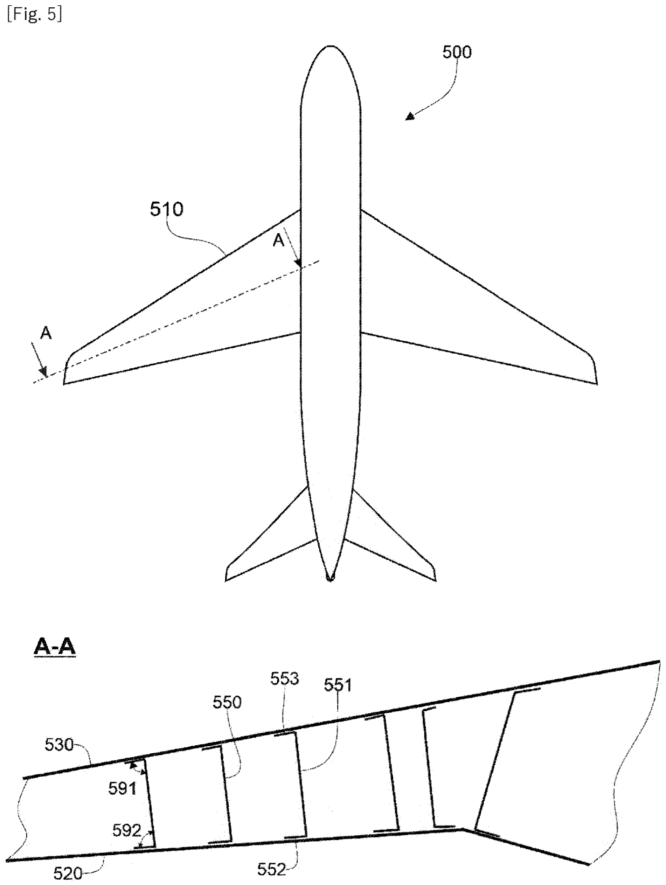

À titre d'exemple non limitatif, figure 5, la voilure (510) d'un aéronef (500), comprend, une pluralité de nervures (550) s'étendant entre l'intrados (520) et l'extrados (530).

Ces nervures (ou *ribs*) se présentent comme des pièces à bords tombés, comportant une âme (551) et des semelles (552, 553) lesdites semelles étant des bords tombés par rapport à l'âme et assurant la jonction desdites nervures avec les peaux de la voilure, côtés intrados et extrados.

Du fait de la section de l'aile qui s'affine vers son extrémité et s'élargit vers sa connexion avec le fuselage, certaines de ces nervures, pour pouvoir être connectées aux peaux, doivent présenter des bords tombés avec un pincement, c'est-à-dire qu'au moins un des angles (591, 592) entre l'âme (551) et les semelles (552, 552) de la nervure est inférieur à 90°.

Selon l'art antérieur ces nervures sont alors réalisées en rapportant une pièce spécifique en lieu et place d'au moins un des bords tombés.

La mise en oeuvre de l'outillage objet de l'invention permet de réaliser ces pièces d'un seul tenant, c'est-à-dire sans pièce rapportée, directement par estampage.

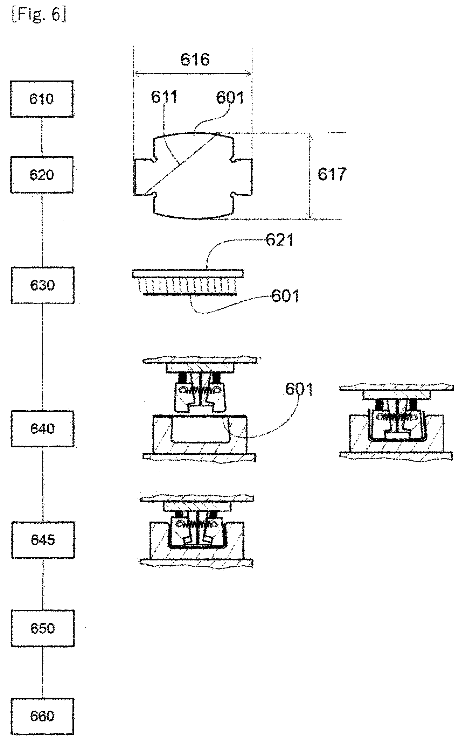

Ainsi, figure 6, l'invention concerne également un procédé mettant en oeuvre l'outillage objet de l'invention, pour la réalisation par estampage d'un flan composite à matrice polymère thermoplastique et renfort fibreux continu.

La pièce finale à obtenir est par exemple une nervure de voilure, comprenant une âme et au moins deux semelles en bords tombés par rapport à cette âme, au moins une desdites semelles s'étendant selon une direction formant un angle inférieur à 90° par rapport à l'âme.

Selon une première étape (610) de réglage, le poinçon de l'outillage est réglé notamment au moyen des cales pelables entre les deux parties du poinçon de sorte qu'appairé avec une matrice, l'entrefer entre ladite matrice et les diverses parties du poinçon en fin de course de frappe de la presse soit adapté aux épaisseurs visées de la pièce.

Selon une étape (620) d'obtention d'un flan composite (601) destiné à être formé par le procédé objet de l'invention est obtenu selon des techniques connues de l'art antérieur. Le flan composite comprend une matrice polymère thermoplastique notamment par une température de fusion et éventuellement des températures de cristallisation ou de transition vitreuse selon la nature du polymère. À titre d'exemples non limitatifs, pour des applications aéronautiques, ledit polymère est un polyétheréthercétone (PEEK), un polyéthercétone-cétone (PEKK), un polyétherimide (PEI) ou un polysulphure de phénylène (PPS),

Le flan est renforcé par des fibres de renfort continues (611), c'est-à-dire s'étendant continûment entre deux bords du flan (601), de verre, de carbone ou d'aramide, seules ou en combinaison, sans que ces exemples ne soient limitatifs. Ces fibres ont la particularité de ne pas présenter de plasticité aux températures d'utilisation de la pièce ou de mise en oeuvre du matériau composite.

Le flan est obtenu par des techniques connues de l'art antérieur. Il est par exemple obtenu par découpage au jet d'eau haute pression dans une plaque composite préconsolidée, ou par un procédé tel que décrit dans le document EP 3 096 940.

Le flan ainsi obtenu est plan et rigide.

Selon une étape (630) de chauffage, le plan est chauffé à une température égale ou supérieure à la température de fusion de la matrice polymère. À cette fin et selon un exemple de mise en oeuvre, le plan est transporté sur une feuille thermalymide ou dans un outillage tel que décrit dans le document EP 3 065 931 sous un panneau rayonnant infrarouge (621) et chauffé à l'air libre jusqu'à cette température.

Selon une étape d'estampage (640) le flan (601) chaud est placé sur la matrice alors que le poinçon est éloigné de celle-ci, puis le poinçon est déplacé vers la matrice de sorte à déformer le flan.

Une largeur du flan (616, 617) est selon toutes les directions supérieure à la largeur de l'ouverture de la matrice, de sorte que celui-ci repose sur les bords de la matrice et ne peut épouser les formes de la matrice que si celui-ci est poussé dans l'empreinte et déformé par le poinçon.

Cette déformation est possible par le glissement relatif des fibres continues du composite dans la matrice polymère chauffée à une température où elle n'oppose quasiment plus de résistance à ce déplacement relatif le flan ayant été déconsolidé au cours de l'étape de chauffage et également décompacté au cours de cette première phase d'estampage.

Au cours d'une étape de compactage (645) qui en pratique suit de manière continue la phase d'estampage, lorsque la course de frappe vient coincer le fond de la pièce, qui constituera l'âme, entre l'extrémité du poinçon et le fond de l'empreinte sous une certaine pression qui dépend des caractéristiques des ressorts de compression entre le poinçon et le plateau mobile (130 figure 1) ; la poursuite de la course du plateau mobile de la presse produit l'expansion latérale du poinçon ce qui a pour effet de compacter les bords tombés entre les parois latérales de l'empreinte de la matrice et les parois latérales mobiles du poinçon.

Le compactage élimine les vides entre les fibres assurant une distribution uniforme des fibres et de la matrice dans toute épaisseur de la pièce.

Au cours d'une étape de consolidation (650) la pièce est refroidie en maintenant la pression dans l'outillage, c'est-à-dire sans déplacer le plateau mobile de la presse par rapport à l'étape précédente, jusqu'à ce que la pièce atteigne une température appropriée à son démoulage. À cette fin, selon des exemples de réalisation non représentés, la matrice comprend avantageusement des moyens de chauffage et de refroidissement pour un meilleur contrôle des températures au cours des différentes phases.

Au cours d'une étape de démoulage (660) le plateau mobile est éloigné de la matrice et la pièce est démoulée.

La pièce est ensuite détourée par jet d'eau ou par fraisage de sorte à éliminer les bords non compactés.

La description ci-avant et les exemples de réalisation montrent que l'invention atteint le but visé et permet notamment, par estampage d'un flan composite à renfort fibreux continu, la réalisation de pièce à bords tombés en pincement tout en offrant un contrôle précis des épaisseurs tant du fond que des bords tombés. Bien entendu le dispositif objet de l'invention est également adapté à la réalisation de pièces à bords tombés sans pincement voir allant en s'évasant. Dans ce dernier cas, la présence de mobilités offre un contrôle accru des épaisseurs tant de l'âme que des bords tombés, et par suite une meilleure qualité de pièce en termes de santé matière.

## Revendications

1. Outillage pour l'estampage d'un flan composite à matrice
thermoplastique (601), comprenant :
- une presse comportant un plateau fixe (101), un plateau mobile (102) et des moyens pour déplacer le plateau mobile vers le plateau fixe selon une direction de frappe (190) ;
- une matrice comprenant une empreinte (110) apte à être fixée sur le plateau fixe de la presse, comprenant une ouverture avec une largeur d'entée (116) et comportant un fond (111) et des parois latérales (112) ;
- un poinçon (120) apte à être monté sur le plateau mobile de la presse, dont la forme externe est appairée avec l'empreinte de la matrice et comprenant une partie centrale (123) et au moins deux parties mobiles latérales (121, 122, 321, 322, 323, 324) en liaison glissière avec la partie centrale (123) comprenant une extrémité entre les parties latérales et formant un coin entre lesdites parties latérales, des moyens de pression entre les parties latérales et le poinçon dans la direction de frappe (190), de sorte qu'une largeur du poinçon (100) soit inférieure à la larguer d'entrée (116) de l'ouverture de la matrice et que les parties latérales étant arrêtées en translation selon la direction de frappe (190) contre le fond (111) de la matrice, le déplacement de la partie centrale (123) dans cette même direction relativement aux parties latérales, provoque le déplacement des parties latérales l'une par rapport à l'autre selon des translations (291, 292) perpendiculaires à la direction de frappe (190), réalisant une première expansion latérale du piston dans la direction de cette translation vers les parois latérales (112) de la matrice, de sorte qu'une largeur d'expansion (200) du poinçon est alors égale ou supérieure à la larguer d'entrée (116) de l'ouverture de la matrice.

2. Outillage selon la revendication 1, dans lequel la partie centrale (123) du poinçon comprend un épaulement (125) formant butée à son extrémité entre les parties mobiles latérales (121, 122), lesdites parties mobiles étant arrêtées en translation dans la direction de la frappe relativement à la partie centrale (123), pressées contre cette butée par au moins un ressort (130) agissant sur les parties mobiles latérales (121, 122) dans la direction de la frappe entre lesdites parties latérales et le plateau mobile (102) de la presse.

3. Outillage selon la revendication 1, dans lequel le poinçon (320) comprend 2 autres parties latérales (323, 324) en liaison glissière avec une partie centrale formant un coin entre lesdites deux autres parties mobiles latérales, de sorte à réaliser une deuxième expansion latérale du piston (320) selon une direction (x) perpendiculaire à la direction d'expansion (291, 292) de la première expansion latérale.

4. Outillage selon la revendication 1, dans lequel la partie centrale (123, 423) en forme de coin comprend deux parties (123₁, 123₂) et entre ces deux parties des moyens (127, 427₁, 427₂) pour régler une largeur de la partie centrale selon la direction de l'expansion latérale.

5. Procédé pour la réalisation d'une pièce comprenant une âme (551) avec une épaisseur d'âme et au moins deux bords tombés (552, 553) au moins l'un desdits bords tombés ayant chacun une épaisseur de bord tombé, lesdits bords tombés étant orientés par rapport à l'âme d'un angle (591, 592) inférieur à 90°, ledit procédé mettant en oeuvre un outillage selon la revendication 4 et comprenant des étapes consistant à :
- appairer (610) le poinçon et la matrice de l'outillage en réglant les moyens (127, 427₁, 427₂) pour régler la largeur de la partie centrale du poinçon en fonction des épaisseurs de l'âme et des bords tombés ;
- obtenir (620) un flan composite dont une largeur (616, 617) est supérieure à la largeur (116) de l'ouverture de la matrice ;
- chauffer (630) le flan composite à une température égale ou supérieure à une température de fusion de la matrice polymère ;
- positionner le flan composite au-dessus de la matrice de l'outillage et estamper (640) le flan composite (601) entre le poinçon et l'empreinte de la matrice selon une course de frappe du plateau mobile jusqu'à ce que l'extrémité du poinçon atteigne une distance du fond (111) de l'empreinte égale à l'épaisseur de l'âme ;
- poursuivre la course du plateau mobile pour déplacer les parties latérales mobiles du poinçon jusqu'à des distances des parois latérales de l'empreinte égales aux épaisseurs des bords tombés et compacter (645) la pièce ;
- refroidir la pièce sous pression entre le poinçon et l'empreinte jusqu'à une température inférieure à la température de fusion de la matrice polymère pour consolider (650) la pièce ;
- déplacer le plateau mobile en sens inverse et démouler (660) la pièce.
